# FASCICULE DE BREVET EUROPEEN

(11) **EP 2 381 330 B1**
(45) Date de publication et mention de la délivrance du brevet: **07.08.2019**
(21) Numéro de dépôt: 11163180.0
(22) Date de dépôt: 20.04.2011
(51) Int. Cl.: B60K 37/06

(54) **Dispositif de commande à indexage magnétique**
Steuervorrichtung mit Magnetindexierung
Control device with magnetic indexing

(30) Priorité: 20.04.2010 FR 1001681
(43) Date de publication de la demande: 26.10.2011
(73) Titulaire: VALEO SYSTEMES THERMIQUES, 78320 Le Mesnil Saint-Denis (FR)
(72) Inventeur: Autran, Frédéric, 75018 Paris (FR)
(74) Mandataire: Pothmann, Karsten

(56) Documents cités:
- EP-A1- 1 858 039
- EP-A2- 2 034 383
- DE-A1- 4 109 544
- DE-A1- 10 304 804
- DE-A1-102007 039 318
- US-A- 3 344 378
- US-A1- 2004 094 393
- US-A1- 2009 095 614

## Description

La présente invention concerne un dispositif de commande à indexage.

L'invention propose plus particulièrement un dispositif de commande à indexage de type rotatif, poussoir, basculeurs ou encore touches à enfoncement, particulièrement bien destiné à un ensemble de commande d'un tableau de bord de véhicule automobile.

Classiquement, un tel dispositif de commande comprend un organe de commande manuelle, de type bouton, dont l'actionnement par un utilisateur entraîne l'activation d'un organe associé, en fonction des différentes positions occupées par cet organe de commande.

Lors de la manipulation de cet organe de commande, il est important que l'utilisateur ressente un effet tactile, par exemple par le passage d'un point dur, de façon à sentir que la manoeuvre a bien été effectuée. Cet effet est communément appelé « indexage » de la position de l'organe de commande.

Les dispositifs de commande utilisés dans l'industrie automobile utilisent éventuellement deux mécanismes distincts pour assurer la fonction d'indexage.

On connaît des dispositifs de commande dont l'indexage est réalisé mécaniquement au moyen de ressort sur une rampe ou au moyen d'une came crantée. Par exemple, on connaît des dispositifs tels que des boutons rotatifs dont l'indexage est réalisé au moyen d'une bille et d'un ressort, la bille parcourant un profil circulaire comportant des bossages.

On connaît également, d'après le document FR-A-2 804 240, un dispositif de commande de fonctions électriques d'un véhicule automobile, par indexage magnétique.

Ce dispositif comprend un boîtier, un organe de commande manuelle en rotation et des moyens d'indexage de la position de cet organe de commande.

Les moyens d'indexage comprennent une couronne intérieure cylindrique solidaire de l'organe de commande rotatif et munie sur sa périphérie extérieure de plusieurs aimants permanents et une couronne extérieure cylindrique solidaire du boîtier, munie également de plusieurs aimants permanents sur sa face intérieure. Les deux couronnes sont montées coaxiales, la couronne intérieure étant en regard de la couronne extérieure.

Un tel dispositif présente un encombrement radial très important limitant les possibilités d'installation, par exemple dans un tableau de bord d'un véhicule automobile, et qui rend son installation difficile, par exemple sur un levier de commande.

De plus, l'effet tactile ressenti par l'utilisateur dans ce type de dispositif est identique quelle que soit la position de l'organe de commande ; on parle alors d'indexage symétrique.

Il n'est alors pas possible avec ce type de dispositif de proposer à l'utilisateur un indexage asymétrique, c'est-à-dire un effet tactile différent, par exemple, entre une manoeuvre horaire, d'une première position à la position suivante, et une manoeuvre antihoraire entre la première position et une position précédente de l'organe de commande manuelle.

Or, du fait de l'évolution des besoins dans l'automobile, on exige de plus en plus des dispositifs de commande présentant des qualités de fonctionnement améliorées en terme d'ergonomie, de confort, de facilité d'utilisation, avec un rendu tactile doux, restant constant avec le temps, et donnant une information tactile à l'utilisateur différente selon le type de commande sélectionnée et selon le sens de sélection d'une commande.

Dans ce contexte, l'invention vise à résoudre au moins un des problèmes mentionnés précédemment et vise à remplir les exigences actuelles ne pouvant être satisfaites de façon suffisante par les dispositifs de commande connus notamment de l'industrie automobile.

A cette fin, l'invention propose un dispositif de commande à indexage comportant :
- un bouton de commande manuelle;
- un moyen d'indexage définissant une pluralité de positions indexées dudit bouton de commande et exerçant une résistance au déplacement perceptible par un utilisateur dudit bouton de commande manuelle lorsque ledit bouton se trouve dans une position indexée ;
ledit dispositif étant caractérisé en ce que ledit moyen d'indexage comporte :
- un premier sous dispositif d'indexage principal produisant une première résistance au déplacement,
- un second sous dispositif d'indexage d'ajustement produisant une seconde résistance au déplacement d'ajustement,
les dispositifs d'indexage étant agencés de sorte que les résistances aux déplacements principal et d'ajustement sont d'une part additionnées et d'autre part déphasées entre elles de sorte que la résistance au déplacement perceptible par un utilisateur du dispositif de commande soit perçue de manière dissymétrique de part et d'autre du point d'indexage.

L'invention a pour but la réalisation d'un dispositif de commande à indexage, en particulier pour véhicule automobile permettant de réaliser une fonction d'indexage asymétrique, à partir d'une position indexée, entre un déplacement dans un sens et un mouvement dans le sens contraire.

L'indexage asymétrique étant réalisé par la somme de couples résistants au moyen d'au moins deux systèmes créant ainsi une résistance globale au déplacement du bouton de commande. Chacun des systèmes étant composé d'éléments tels que leur interaction créée un couple résistant au mouvement du bouton de commande.

Selon une ou plusieurs caractéristiques du dispositif de commande à indexage, prise seule ou selon toutes les combinaisons techniquement possibles,
- au moins un sous dispositif d'indexage produit la résistance au déplacement par des forces magnétiques pour former un dispositif d'indexage magnétique..
- le premier sous dispositif d'indexage est magnétique et comporte une première pluralité de dents ferromagnétiques coopérant avec un premier aimant permanent et en ce que le second sous-dispositif d'indexage est magnétique et comporte une deuxième pluralité de dents ferromagnétiques coopérant avec un deuxième aimant permanent
- le premier sous dispositif d'indexage est magnétique et comporte une première pluralité de dents ferromagnétiques coopérant avec un premier aimant permanent et en ce que le second dispositif d'indexage est magnétique et comporte une deuxième pluralité de dents ferromagnétiques coopérant avec ledit premier aimant permanent.
- lesdites pluralités de dents ferromagnétiques sont entraînées en mouvement par une action sur ledit bouton de commande.
- lesdits aimants permanents sont entraînés en mouvement par une action sur ledit bouton de commande.
- lesdites pluralités de dents ferromagnétiques sont réalisées dans un matériau en fer doux.
- le bouton de commande manuelle est actionné par un mouvement de rotation et que les sous dispositifs d'indexage produisent des couple de résistance au déplacement en rotation.
- le bouton de commande manuelle est actionné par un mouvement de translation et que les sous dispositifs d'indexage produisent des forces de résistance au déplacement en translation.
- ledit dispositif comporte :
   une première couronne solidaire dudit bouton de commande comportant ladite première pluralité de dents ferromagnétiques coopérant avec ledit premier aimant formant le premier sous dispositif d'indexage principal;
   une deuxième couronne solidaire dudit bouton de commande comportant ladite deuxième pluralité de dents ferromagnétiques coopérant avec ledit deuxième aimant ou ledit premier aimant formant le second sous dispositif d'indexage d'ajustement;
   ladite première couronne et ladite deuxième couronne sont coaxiales et solidaires d'un axe de rotation.
- ledit dispositif comporte une unique couronne portant le premier sous dispositif d'indexage principal et le second sous dispositif d'indexage d'ajustement et comporte, dans sa périphérie extérieure, ladite première pluralité de dents ferromagnétiques et, dans sa périphérie intérieure, ladite deuxième pluralité de dents ferromagnétiques.
- au moins une des deux pluralités de dents comporte au moins un premier type de dents et un deuxième type de dents , ledit premier et ledit deuxième type étant différents par la longueur de leur extrémité libre.
- lesdits systèmes magnétiques comportent un couple d'anneaux en matériau magnétisé comportant des secteurs aimantés de tailles différentes.
- au moins un sous dispositif d'indexage produit la résistance au déplacement par des forces de frottement mécanique pour former un dispositif d'indexage mécanique.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une représentation en perspective d'un dispositif de commande à indexage magnétique selon l'invention ;
- la figure 2 est une représentation graphique d'un exemple de courbe représentant le couple en fonction de l'angle de rotation du dispositif de commande selon l'invention.

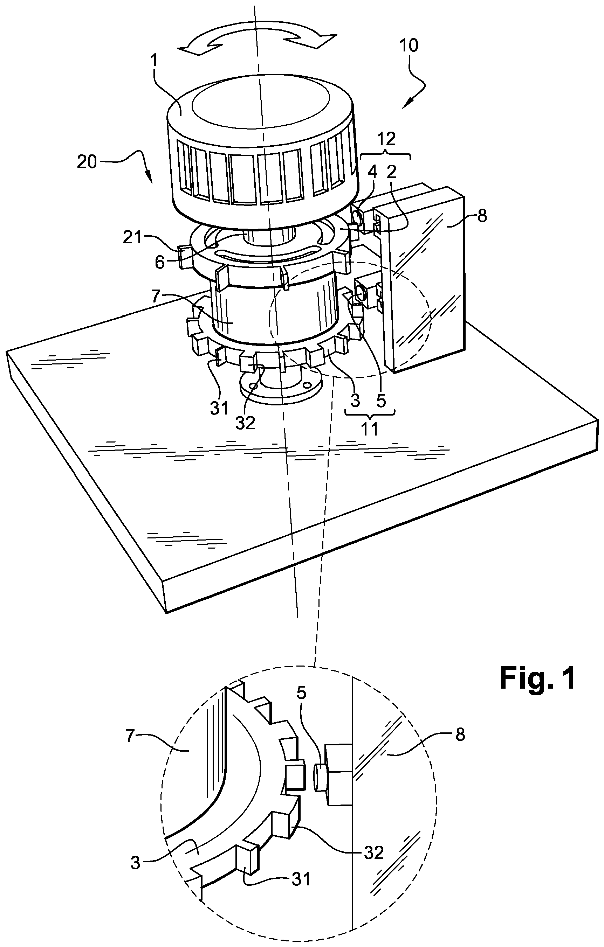

La figure 1 représente un exemple non limitatif de dispositif de commande selon l'invention, de type rotatif, pouvant être intégré dans un tableau de bord de véhicule automobile et dont la fonction principale peut être indifféremment la commande de dispositifs de chauffage, de ventilation, et/ou de climatisation, d'écoute radiophonique, de navigation, de télécommunication, ou encore d'autres fonctions présentes classiquement dans un habitacle de véhicule automobile.

Ce dispositif de commande peut être indifféremment associé à un écran d'affichage placé à proximité, et sur lequel s'affichent les différents paramètres associés au mode de fonctionnement de cette fonction et éventuellement au mode de fonctionnement d'autres fonctions du véhicule automobile.

Plus précisément, la figure 1 illustre en perspective une partie du dispositif de commande et plus particulièrement le mécanisme d'indexage magnétique 11, 12 du dispositif illustré dans son ensemble par la référence 10.

Le dispositif de commande 10 comporte notamment :
- un bouton de commande manuelle 1 monté sur une extrémité supérieure d'un axe de rotation 6 et dont l'extrémité inférieure coopère par exemple avec un circuit imprimé (non représenté), un moyen d'encodage (non représenté) permettant d'encoder l'information mécanique en information numérique, ou autre dispositif équivalent ;
- une première couronne dentée 3 cylindrique solidaire d'un corps 7 lui-même solidaire de l'axe de rotation 6, la couronne dentée 3 comportant une pluralité de dents 31, 32 réparties sur sa périphérie extérieure.
- une deuxième couronne 2 dentée, cylindrique, coaxiale à la première couronne 3, et solidaire du corps 7 ; la deuxième couronne 2 comportant une pluralité de dents 21 réparties sur sa périphérie extérieure.

Les deux couronnes 2 et 3 sont donc mobiles en rotation selon l'axe de rotation 6, et sont solidaires de la rotation du bouton de commande 1.

L'axe de rotation 6 peut coopérer avec un circuit imprimé (non représenté) et des moyens intermédiaires de type potentiomètre, frotteur, ou tout autre type d'encodeur (non représentés) afin de sélectionner sur le circuit imprimé les pistes appropriées et correspondant à la position relative du bouton de commande 1.

Dans ce mode de réalisation, le dispositif de commande 10 comporte également deux aimants permanents 4 et 5, décalés axialement et ici superposés, situés en regard d'au moins une dent de chaque couronne cylindrique 2, 3.

Les aimants permanents 4, 5 sont fixés sur un corps 8 lui-même fixe par rapport au mouvement du bouton de commande 1.

La première couronne dentée 3 coopérant avec un premier aimant permanent 4 forme le premier sous dispositif d'indexage principal.

La deuxième couronne dentée coopérant avec un deuxième aimant 5 forme le second sous dispositif d'indexage d'ajustement ou de compensation.

Les aimants 4, 5 sont superposés à une distance équivalente à la distance séparant les deux couronnes cylindriques 2, 3 ; la distance entre les deux couronnes 2, 3 étant déterminée de façon à ce que l'aimant permanent 5 de la première couronne cylindrique 3 ne perturbe pas le champ magnétique de l'aimant 4 et l'interaction électromagnétique avec la deuxième couronne cylindrique 2.

Ainsi, lors de la rotation du bouton de commande 1, les dents 21 passent successivement devant l'aimant 4 et les dents 31, 32 passent successivement devant l'aimant 5.

Les deux couronnes dentées 2 et 3 sont réalisées préférentiellement dans un matériau de type fer doux ou tout autre matériau magnétique à faible rémanence, afin de s'affranchir des effets d'une aimantation permanente des dents 21, 31, 32.

Dans les dispositifs de commande à indexage, les positions d'indexage sont définies par les positions d'équilibre mécanique stables du dispositif de commande.

L'équilibre mécanique stable est réalisé lorsque les dents 31, 32, 21 se trouvent positionnées au droit des aimants permanents 4, 5, c'est-à-dire lorsque le l'entrefer entre la dent et l'aimant est le plus faible. Cette position correspond à la position d'indexage.

Pour sortir d'une position d'indexage, l'utilisateur doit fournir un effort correspondant à un couple au moins égal à la valeur du couple résistif induit par le passage du flux magnétique entre la dent et l'aimant permanent.

Le couple à fournir pour sortir de cette position d'indexage est défini en fonction de la taille de la dent, c'est-à-dire de la dimension de la surface soumise au champ magnétique, de la position de la dent sur la couronne mais également en fonction l'entrefer, c'est-à-dire de la distance entre la dent et l'aimant permanent.

Les positions d'indexage et les couples d'indexage sont généralement dimensionnées au moyen d'un logiciel de simulation et représentées au moyen d'une courbe représentant le couple, ou l'effort, en fonction de l'angle, nommée classiquement courbe couple/angle, ou encore couple/déplacement si le déplacement du bouton de commande est une translation. Ces courbes couple/angle forment sensiblement une pseudo-sinusoïdale dont l'amplitude est dimensionnée par l'entrefer de la dent, la finesse par la largeur de la dent, et la phase par la position de la dent sur la couronne.

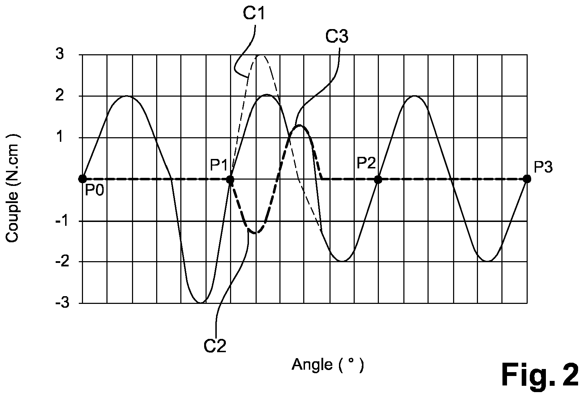

Un exemple de courbe couple/angle est représenté par le graphique illustré en figure 2.

Sur les courbes illustrées, les couples nécessaires pour sortir d'une position d'indexage sont représentées par les valeurs maximales des courbes pseudo-sinusoïdales dans un sens de rotation et par les valeurs minimales dans le sens inverse de rotation.

Les valeurs de couples sont données à titre indicatif et ne limitent nullement l'invention à ce mode de réalisation.

Dans le dispositif 10 selon l'invention, la première couronne 3 est la couronne principale du dispositif comportant les dents 31, 32 dimensionnées de façon à présenter une première courbe couple/angle, représentée par la référence C1 sur la figure 2.

La courbe C1 définit pour quatre positions d'indexage P0, P1, P2, P3 les couples à fournir pour passer d'une position d'indexage à une deuxième position d'indexage. Ainsi, par exemple, pour passer de la position P1 à P2, il est nécessaire de fournir un couple de 3 N.cm. Il en est de même pour le passage de la position P1 à P0.

La courbe C1 est une courbe symétrique, c'est-à-dire que les couples sont identiques lors du passage d'une position d'indexage à un autre aussi bien pour un mouvement de rotation dans le sens horaire que pour un mouvement de rotation dans le sens antihoraire du bouton de commande 1.

La deuxième couronne cylindrique 2 est une couronne d'ajustement dont les dents 21 sont dimensionnées de façon à compenser les couples induits par la première couronne 3. Les dents 21 de la couronne 2 sont dimensionnées de façon à représenter la courbe couple/angle C2 illustrée sur la figure 2.

Les dents 21 sont dimensionnées de sorte que leur passage devant l'aimant 4 de la deuxième couronne 2 provoque, à partir du point d'indexage P1, un couple en déphasage par rapport au couple généré par la première couronne cylindrique 3 (courbe C1).

Cela se traduit par le fait que le couple négatif induit par la deuxième couronne 2 compense le couple positif induit par la première couronne 3 de sorte que le couple résultant correspond à la somme des deux couples induits par les couronnes cylindriques 2, 3, la courbe résultante étant illustrée par la courbe couple/angle C3.

Dans le mode de réalisation illustré, le couple final, ressenti par l'utilisateur est identique pour le passage des positions P0 à P1, P1 à P2, P2 à P3, P3 à P2, P2 à P1, c'est-à-dire 2 N.cm alors que pour le passage de P1 à P0, l'utilisateur doit fournir un effort supplémentaire pour dépasser le couple maximal d'indexage de 3 N.cm.

Cet effort supplémentaire à fournir par l'utilisateur permet de s'affranchir d'un passage accidentel à la position P0, si la position P0 correspond par exemple à une situation précise où le passage à la position P0 peut occasionner une gêne à l'utilisateur.

On notera toutefois, que la couronne cylindrique 2 de compensation ou d'ajustement génère également un couple positif équivalent au couple négatif, venant s'ajouter au couple positif généré par la couronne cylindrique 3 principale. Cependant, le couple positif de compensation intervient dans une de zone de transition dans laquelle l'utilisateur ne ressent pas ce sursaut de couple.

L'obtention d'un dispositif de commande à indexage magnétique peut par exemple comporter notamment les étapes consistant à :
- définir une courbe cible asymétrique correspondant aux couples souhaités lors de la manoeuvre du bouton de commande par un utilisateur ;
- équilibrer la courbe cible asymétrique de sorte que la courbe soit de moyenne nulle ;
- décomposer la courbe cible équilibrée en une pluralité de courbes sinusoïdales symétriques ;
- déterminer au moins une courbe de compensation sinusoïdale symétrique par des moyens classiques d'optimisation logiciels ;
- dimensionner le dispositif de commande pour chaque période élémentaire symétrique des courbes sinusoïdales symétriques déterminée sachant que :
   - l'amplitude de la courbe sinusoïdale est dépendante de la valeur de l'entrefer ;
   - la finesse de la courbe sinusoïdale est dépendante de la largeur de la dent ;
   - la phase de la courbe sinusoïdale est dépendante de la position de la dent.

L'invention a été particulièrement décrite pour un dispositif de commande rotatif dont les deux couronnes sont montées sur un même axe de rotation permettant ainsi de simplifier la réalisation d'un tel dispositif.

Toutefois, il est également possible de réaliser le dispositif selon l'invention avec une couronne unique comportant sur la périphérie d'une demi-couronne les dents de compensation et sur la périphérie de l'autre demi-couronne les dents principales en opposition de phase avec les dents de compensation ; les deux aimants étant alors disposés de part et d'autre de la couronne. Ce mode de réalisation permet notamment de supprimer une pièce pour des dispositifs de commande ne nécessitant pas une rotation supérieure à 90°.

Le dispositif selon l'invention peut également être réalisé avec une couronne comportant sur sa périphérie externe une série de dents, par exemple la série de dents principales, et sur sa périphérie interne la série de dents de compensation.

Le dispositif selon l'invention peut comporter également une pluralité d'aimants superposés afin d'augmenter l'aimantation des dents et par conséquent le couple nécessaire à l'extraction du bouton de commande manuelle d'une position d'indexage.

Le dispositif selon l'invention peut également présenter des roues dentées fixes et des aimants entrainés par le bouton de commande ou encore une première roue dentée et un premier aimant fixes, et une deuxième roue et un deuxième aimant entraînés par le bouton de commande.

Enfin, l'invention a été particulièrement décrite pour un dispositif de commande rotatif ; toutefois, l'invention est également applicable à un dispositif de commande linéaire de type, poussoir, basculeurs ou encore touches à enfoncement, ou à un dispositif de commande de forme quelconque. On remplacera alors les relations Couple/Angle par des relations Effort/Déplacement.

Tout en restant dans l'esprit de l'invention, il est tout à fait possible d'envisager différents modes de réalisation du premier sous dispositif d'indexage principal et/ou du second sous dispositif d'indexage d'ajustement ou de compensation.

Ainsi, au lieu d'être magnétiques, les premiers et seconds dispositifs d'indexage peuvent être mécaniques.

Dans le cas d'un dispositif à indexage mécanique, la résistance au déplacement provient des forces de frottement mécaniques.

Selon une autre variante de réalisation, les technologies mécaniques et magnétiques peuvent être combinées de manière à avoir un indexage mécanique combiné avec un indexage magnétique.

A titre d'exemple non limitatif, l'indexage mécanique pourra être réalisé à l'aide d'un ressort se déplaçant sur une rampe ou au moyen d'une came crantée ou encore au moyen d'une bille contrainte par un ressort, la bille parcourant un profil circulaire comportant des bossages.

Dans tous les cas, la résistance au déplacement perceptible par un utilisateur sera perçue de manière dissymétrique de part et d'autre du point d'indexage.

## Revendications

1. Dispositif de commande (10) à indexage comportant :
- un bouton de commande manuelle (1) ;
- un moyen d'indexage définissant une pluralité de positions indexées dudit bouton de commande (1) et exerçant une résistance au déplacement perceptible par un utilisateur dudit bouton de commande manuelle (1) lorsque ledit bouton se trouve dans une position indexée ;
ledit dispositif étant **caractérisé en ce que** ledit moyen d'indexage comporte :
- un premier sous dispositif d'indexage principal (11) produisant une première résistance au déplacement,
- un second sous dispositif d'indexage d'ajustement (12) produisant une seconde résistance au déplacement d'ajustement,
**en ce qu'**au moins un sous dispositif d'indexage (11,12) produit la résistance au déplacement par des forces magnétiques pour former un dispositif d'indexage magnétique,
**en ce que** le premier sous dispositif d'indexage (11) est magnétique et comporte une première pluralité de dents ferromagnétiques (31, 32) coopérant avec un premier aimant (5) permanent et **en ce que** le second sous-dispositif d'indexage (12) est magnétique et comporte une deuxième pluralité de dents ferromagnétiques (21) coopérant avec un deuxième aimant permanent (4) et
**en ce que** les dispositifs d'indexage sont agencés de sorte que les résistances aux déplacements principal et d'ajustement sont d'une part additionnées et d'autre part déphasées entre elles de sorte que la résistance au déplacement perceptible par un utilisateur du dispositif de commande (10) soit perçue de manière dissymétrique de part et d'autre du point d'indexage.

2. Dispositif de commande (10) à indexage selon la revendication 1 **caractérisé en ce que** le premier sous dispositif d'indexage (11) est magnétique et comporte une première pluralité de dents ferromagnétiques coopérant avec un premier aimant permanent (5) et **en ce que** le second dispositif d'indexage est magnétique et comporte une deuxième pluralité de dents ferromagnétiques coopérant avec ledit premier aimant permanent (5).

3. Dispositif de commande (10) à indexage selon l'une quelconque des revendications 1 ou 2, **caractérisé en ce que** lesdites pluralités de dents ferromagnétiques (21, 31, 32) sont entraînées en mouvement par une action sur ledit bouton de commande (1).

4. Dispositif de commande (10) à indexage selon l'une quelconque des revendications 1 ou 2, **caractérisé en ce que** lesdits aimants permanents sont entraînés en mouvement par une action sur ledit bouton de commande.

5. Dispositif de commande (10) à indexage magnétique selon l'une des revendications précédentes, **caractérisé en ce que** lesdites pluralités de dents ferromagnétiques (21, 31, 32) sont réalisées dans un matériau en fer doux.

6. Dispositif de commande (10) à indexage selon l'une quelconque des revendication 1 à 5, **caractérisé en ce que** le bouton de commande manuelle (1) est actionné par un mouvement de rotation et que les sous dispositifs d'indexage produisent des couple de résistance au déplacement en rotation.

7. Dispositif de commande (10) à indexage selon l'une quelconque des revendication 1 à 6 **caractérisé en ce que** le bouton de commande manuelle (1) est actionné par un mouvement de translation et que les sous dispositifs d'indexage produisent des forces de résistance au déplacement en translation.

8. Dispositif de commande (10) à indexage selon la revendication 6 **caractérisé en ce que** ledit dispositif comporte :
- une première couronne (3) solidaire dudit bouton de commande (1) comportant ladite première pluralité de dents ferromagnétiques (31, 32) coopérant avec ledit premier aimant (5) formant le premier sous dispositif d'indexage principal;
- une deuxième couronne (2) solidaire dudit bouton de commande (1) comportant ladite deuxième pluralité de dents ferromagnétiques (21) coopérant avec ledit deuxième aimant (4) ou ledit premier aimant formant le second sous dispositif d'indexage d'ajustement.

9. Dispositif de commande (10) à indexage selon la revendication précédente **caractérisé en ce que** ladite première couronne (3) et ladite deuxième couronne (2) sont coaxiales et solidaires d'un axe de rotation (6).

10. Dispositif de commande (10) à indexage selon la revendication 6 **caractérisé en ce que** ledit dispositif comporte une unique couronne portant le premier sous dispositif d'indexage principal et le second sous dispositif d'indexage d'ajustement et comporte, dans sa périphérie extérieure, ladite première pluralité de dents ferromagnétiques et, dans sa périphérie intérieure, ladite deuxième pluralité de dents ferromagnétiques.

11. Dispositif de commande (10) à indexage selon l'une quelconque des revendications précédentes **caractérisé en ce qu'**au moins une des deux pluralités de dents (31, 32) comporte au moins un premier type de dents (31) et un deuxième type de dents (32), ledit premier et ledit deuxième type étant différents par la longueur de leur extrémité libre.

12. Dispositif de commande à indexage magnétique selon l'une quelconque des revendications précédentes, **caractérisé en ce que** lesdits systèmes magnétiques comportent un couple d'anneaux en matériau magnétisé comportant des secteurs aimantés de tailles différentes.

13. Dispositif de commande (10) à indexage selon l'une quelconque des revendications précédentes **caractérisé en ce qu'**au moins un sous dispositif d'indexage produit la résistance au déplacement par des forces de frottement mécanique pour former un dispositif d'indexage mécanique.

## Patentansprüche

1. Steuervorrichtung (10) mit Indexierung, umfassend:
- einen manuellen Steuerknopf (1);
- ein Indexierungsmittel, das eine Vielzahl von indexierten Positionen des Steuerknopfes (1) definiert und einen Widerstand gegen die von einem Benutzer wahrnehmbare Bewegung des manuellen Steuerknopfes (1) ausübt, wenn sich der Knopf in einer indexierten Position befindet;
wobei die Vorrichtung **dadurch gekennzeichnet ist, dass** das Indexierungsmittel umfasst:
- eine erste Untervorrichtung zur Hauptindexierung (11), die einen ersten Widerstand gegen die Bewegung erzeugt,
- eine zweite Untervorrichtung zur Justierindexierung (12), die einen zweiten Widerstand gegen die Justierbewegung erzeugt,
dass mindestens eine Indexierungs-Untervorrichtung (11, 12) den Wiederstand gegen die Bewegung durch Magnetkräfte erzeugt, um eine Magnetindexierungsvorrichtung zu bilden,
dass die erste Indexierungs-Untervorrichtung (11) magnetisch ist und eine erste Vielzahl von ferromagnetischen Zähnen (31, 32) umfasst, die mit einem ersten Dauermagneten (5) zusammenwirken, und dass die zweite Indexierungs-Untervorrichtung (12) magnetisch ist und eine zweite Vielzahl von ferromagnetischen Zähnen (21) umfasst, die mit einem zweiten Dauermagneten (4) zusammenwirken, und
dass die Indexierungsvorrichtungen derart angeordnet sind, dass die Widerstände gegen die Haupt- und Justierbewegungen einerseits addiert und andererseits zueinander phasenverschoben sind, so dass der Widerstand gegen die von einem Benutzer wahrnehmbare Bewegung der Steuervorrichtung (10) auf asymmetrische Weise beiderseits des Indexierungspunktes wahrgenommen wird.

2. Steuervorrichtung (10) mit Indexierung nach Anspruch 1, **dadurch gekennzeichnet, dass** die erste Indexierungs-Untervorrichtung (11) magnetisch ist und eine erste Vielzahl von ferromagnetischen Zähnen umfasst, die mit einem ersten Dauermagneten (5) zusammenwirken, und dass die zweite Indexierungsvorrichtung magnetisch ist und eine zweite Vielzahl von ferromagnetischen Zähnen umfasst, die mit dem ersten Dauermagneten (5) zusammenwirken.

3. Steuervorrichtung (10) mit Indexierung nach einem der Ansprüche 1 oder 2, **dadurch gekennzeichnet, dass** die Vielzahlen von ferromagnetischen Zähnen (21, 31, 32) durch Betätigen des Steuerknopfes (1) in Bewegung angetrieben werden.

4. Steuervorrichtung (10) mit Indexierung nach einem der Ansprüche 1 oder 2, **dadurch gekennzeichnet, dass** die Dauermagneten durch Betätigen des Steuerknopfes in Bewegung angetrieben werden.

5. Steuervorrichtung (10) mit Magnetindexierung nach einem der vorhergehenden Ansprüche, **dadurch gekennzeichnet, dass** die Vielzahlen von ferromagnetischen Zähnen (21, 31, 32) aus einem Weicheisenmaterial hergestellt sind.

6. Steuervorrichtung (10) mit Indexierung nach einem der Ansprüche 1 bis 5, **dadurch gekennzeichnet, dass** der manuelle Steuerknopf (1) durch eine Drehbewegung betätigt wird, und dass die Indexierungs-Untervorrichtungen Widerstandsmomente gegen die Drehbewegung erzeugen.

7. Steuervorrichtung (10) mit Indexierung nach einem der Ansprüche 1 bis 6, **dadurch gekennzeichnet, dass** der manuelle Steuerknopf (1) durch eine Translationsbewegung betätigt wird, und dass die Indexierungs-Untervorrichtungen Widerstandskräfte gegen die Translationsbewegung erzeugen.

8. Steuervorrichtung (10) mit Indexierung nach Anspruch 6, **dadurch gekennzeichnet, dass** die Vorrichtung umfasst:
- einen ersten Kranz (3), der mit dem Steuerknopf (1) verbunden ist, umfassend die erste Vielzahl von ferromagnetischen Zähnen (31, 32), die mit dem ersten Magneten (5) zusammenwirken, wobei sie die erste Untervorrichtung zur Hauptindexierung bilden;
- einen zweiten Kranz (2), der mit dem Steuerknopf (1) verbunden ist, umfassend die zweite Vielzahl von ferromagnetischen Zähnen (21), die mit dem zweiten Magneten (4) oder dem ersten Magneten zusammenwirken, wobei sie die zweite Untervorrichtung zur Justierindexierung bilden.

9. Steuervorrichtung (10) mit Indexierung nach dem vorhergehenden Anspruch, **dadurch gekennzeichnet, dass** der erste Kranz (3) und der zweite Kranz (2) koaxial und mit einer Drehachse (6) verbunden sind.

10. Steuervorrichtung (10) mit Indexierung nach Anspruch 6, **dadurch gekennzeichnet, dass** die Vorrichtung einen einzigen Kranz umfasst, der die erste Untervorrichtung zur Hauptindexierung und die zweite Untervorrichtung zur Justierindexierung trägt und an seiner äußeren Peripherie die erste Vielzahl von ferromagnetischen Zähnen und an seiner inneren Peripherie die zweite Vielzahl von ferromagnetischen Zähnen umfasst.

11. Steuervorrichtung (10) mit Indexierung nach einem der vorhergehenden Ansprüche, **dadurch gekennzeichnet, dass** mindestens eine der zwei Vielzahlen von Zähnen (31, 32) mindestens einen ersten Typ von Zähnen (31) und einen zweiten Typ von Zähnen (32) umfasst, wobei der erste und der zweite Typ durch die Länge ihres freien Endes unterschiedlich sind.

12. Steuervorrichtung mit Magnetindexierung nach einem der vorhergehenden Ansprüche, **dadurch gekennzeichnet, dass** die Magnetsysteme ein Paar von Ringen aus magnetisiertem Material umfassen, umfassend magnetisierte Sektoren unterschiedlicher Größen.

13. Steuervorrichtung (10) mit Indexierung nach einem der vorhergehenden Ansprüche, **dadurch gekennzeichnet, dass** mindestens eine Indexierungs-Untervorrichtung den Widerstand gegen die Bewegung durch mechanische Reibungskräfte erzeugt, um eine mechanische Indexierungsvorrichtung zu bilden.

## Claims

1. Control device (10) with indexing comprising:
- a manual control knob (1);
- an indexing means defining a plurality of indexed positions of said control knob (1) and exerting a resistance to the displacement that is perceptible to a user of said manual control knob (1) when said knob is in an indexed position;
said device being **characterized in that** said indexing means comprises:
- a first main indexing subdevice (11) producing a first resistance to the displacement,
- a second indexing adjustment subdevice (12) producing a second resistance to the adjustment displacement,
**in that** at least one indexing subdevice (11, 12) produces the resistance to the displacement by magnetic forces to form a magnetic indexing device,
**in that** the first indexing subdevice (11) is magnetic and comprises a first plurality of ferromagnetic teeth (31, 32) cooperating with a first permanent magnet (5) and **in that** the second indexing subdevice (12) is magnetic and comprises a second plurality of ferromagnetic teeth (21) cooperating with a second permanent magnet (4) and **in that** the indexing devices are arranged such that the resistances to the main and adjustment displacements are on the one hand added together and on the other hand phase shifted from one another such that the resistance to the displacement that is perceptible to a user of the control device (10) is perceived dissymetrically on either side of the indexing point.

2. Control device (10) with indexing according to Claim 1, **characterized in that** the first indexing subdevice (11) is magnetic and comprises a first plurality of ferromagnetic teeth cooperating with a first permanent magnet (5) and **in that** the second indexing device is magnetic and comprises a second plurality of ferromagnetic teeth cooperating with said first permanent magnet (5).

3. Control device (10) with indexing according to either one of Claims 1 and 2, **characterized in that** said pluralities of ferromagnetic teeth (21, 31, 32) are driven in movement by an action on said control knob (1).

4. Control device (10) with indexing according to either one of Claims 1 and 2, **characterized in that** said permanent magnets are driven in movement by an action on said control knob.

5. Control device (10) with magnetic indexing according to one of the preceding claims, **characterized in that** said pluralities of ferromagnetic teeth (21, 31, 32) are produced in a soft iron material.

6. Control device (10) with indexing according to any one of Claims 1 to 5, **characterized in that** the manual control knob (1) is actuated by a rotational movement and that the indexing subdevices produce resisting torques to the rotational displacement.

7. Control device (10) with indexing according to any one of Claims 1 to 6, **characterized in that** the manual control knob (1) is actuated by a translational movement and that the indexing subdevices produce resisting forces to the translational displacement.

8. Control device (10) with indexing according to Claim 6, **characterized in that** said device comprises:
- a first crown ring (3) secured to said control knob (1) comprising said first plurality of ferromagnetic teeth (31, 32) cooperating with said first magnet (5) forming the first main indexing subdevice;
- a second crown ring (2) secured to said control knob (1) comprising said second plurality of ferromagnetic teeth (21) cooperating with said second magnet (4) or said first magnet forming the second indexing adjustment subdevice.

9. Control device (10) with indexing according to the preceding claim, **characterized in that** said first crown ring (3) and said second crown ring (2) are coaxial and secured to an axis of rotation (6).

10. Control device (10) with indexing according to Claim 6, **characterized in that** said device comprises a single crown ring bearing the first main indexing subdevice and the second indexing adjustment subdevice and comprises, in its outer periphery, said first plurality of ferromagnetic teeth and, in its inner periphery, said second plurality of ferromagnetic teeth.

11. Control device (10) with indexing according to one of the preceding claims, **characterized in that** at least one of the two pluralities of teeth (31, 32) comprises at least one first type of teeth (31) and one second type of teeth (32), said first and second types being different by the length of their free end.

12. Control device with magnetic indexing according to any one of the preceding claims, **characterized in that** said magnetic systems comprise a pair of rings made of magnetized material comprising magnetized segments of different sizes.

13. Control device (10) with indexing according to any one of the preceding claims, **characterized in that** at least one indexing subdevice produces the resistance to the displacement by mechanical friction forces to form a mechanical indexing device.
